# EUROPEAN PATENT APPLICATION

(11) **EP 4 432 030 A1**
(43) Date of publication of application: **18.09.2024**
(21) Application number: 23162333.1
(22) Date of filing: 16.03.2023
(51) Int. Cl.: G05B 19/418, G06Q 10/06

(54) **SOFT RESET - ERROR HANDLING IN SHOP FLOOR EXECUTABLE SCHEDULE GENERATION**

(71) Applicant: Siemens Aktiengesellschaft, 80333 München (DE)
(72) Inventor: Fink, Rafael, 81829 München (DE); Gottschalk, Corinna, 81379 München (DE)
(74) Representative: Siemens Patent Attorneys

(57) **Abstract**

The present invention concerns a method of determining a replacement plan for a shop floor (100), the shop floor (100) comprising a plurality of automated machine arrangements (105), each machine arrangement (105) being associated to one or more transfer stations (115), a plurality of transport devices (110) being controllable to move containers for material between transfer stations (115) of the machine arrangements (105) and/or of one or more buffer areas (120), the method comprising: receiving (S10) an indication that a deviation from a schedule being executed by the shop floor has occurred; determining (S12) a replacement plan, wherein the replacement plan is based on the schedule, the replacement plan including already started operations, and excluding at least some operations scheduled according to the schedule; and indicating (S14) the replacement plan for automated execution. The invention also concerns related devices.

## Description

The present invention concerns management and operation of a shop floor, in particular automated handling of errors when operating the shop floor according to a schedule.

### Background of the Invention

In the context of industry 4.0, shop floor production environments increasingly feature machines which can operate autonomously, allowing highly automated or even fully automated production processes. Such systems may be intended to operate with a low volume high mix product structure, such that for example a variety of different products may be provided, often in relatively low numbers, at least compared to high volumes provided by dedicated production plants. Due to the high variety in requirements for different products, the question how to organize and control the production on the shop floor is complex.

A good, automated solution for this challenge can greatly increase efficiency. However, there may be errors occurring during automatic operation. There are required approaches of handling such errors in an efficient and preferably automated way. For example, in a scenario, in which an order consists of multiple units to be produced in different steps, error handling may be challenging, since a problem concerning one workpiece (e.g., a product is damaged during production or input is commissioned incorrectly) should not mean the whole order should be scrapped. Instead, the remaining production process may need to be adapted accordingly.

### Disclosure of the Invention

A problem underlying the invention consists in providing an improved technique for handling errors when operating a shop floor.

The invention solves the given problem by means of subject-matter defined in enclosed independent claims. Dependent claims describe preferred embodiments.

There is disclosed a method of determining a replacement plan for a shop floor. The shop floor comprises a plurality of automated machine arrangements, each machine arrangement being associated to one or more transfer stations, and/or one or more transfer stations being associated to a machine arrangement and/or each of the machine arrangements. The shop floor also comprises a plurality of transport devices being controllable to move containers for material between transfer stations of the machine arrangements and/or of one or more buffer areas. The method comprises receiving an indication that a deviation from a schedule being executed by the shop floor has occurred.

The method also comprises determining a replacement plan. The replacement plan is based on the schedule. Moreover, the replacement plan includes already started operations, and excludes at least some operations scheduled according to the schedule, e.g., for future execution according to the (e.g., now previous) schedule. The method also includes indicating the replacement plan for automated execution. It may be considered that a replacement plan may represent a schedule itself, e.g., a replacement schedule and/or a soft reset schedule and/or an updated schedule. The replacement plan may represent or indicate a minimal executable plan. According to the invention, errors or deviations occurring during automated execution of a current schedule may be handled in an automated way, without having to stop all processing on the shop floor.

It may be considered that the method may comprise executing the replacement plan, and/or determining a new schedule. The new schedule may be based on order information pertaining to not yet considered or started orders, and/or may consider not yet completely fulfilled orders; the latter may be represented by a new or updated order. Thus, the replacement plan may allow a bridging time of operation before a new schedule with broader applicability may be provided and/or put into execution. Executing the replacement plan may be performed by a controlling system of the shop floor, in particular a MES.

It may be considered that according to the replacement plan, already started operations are to be continued and/or not stopped. This allows smooth continued operation.

Predecessor operations (e.g., logically necessary and/or operationally necessary and/or conditional) of included (in the replacement plan) already started and/or not yet started operations may be included in the replacement plan. This may provide necessary material and/or conditions to execute the already started operations correctly. It should be noted that already started operations may be combined operations, such that predecessor operations may only be conditional for not yet started actions or steps of the operation already started. Finishing already started operations successfully may be facilitated.

In particular, an operation, or more than one operation, may be a combined operation, which may comprise multiple actions or processing steps to be performed by a machine arrangement and/or transport device. Alternatively, or additionally, an operation may be a productive operation, e.g., a dynamically defined productive operation, which may represent multiple actions to be performed. This may allow accommodation to instruction structures and/or protocols used within the shop floor.

In some variants, one or more reversible already started operations may be excluded from the replacement plan. A reversible operation may be an operation with no predecessor, and/or no successor operation (successor conditional on the operation), and/or which can be stopped and/or reversed without interference to other operations. This may help limiting the replacement plan, allowing quick return to normal operation.

It may be considered that operations included already started operations are conditioned on may be included in the replacement plan. Such operations may be operations that have to be carried out for the already started operation to be finished successfully, and/or without one or more actions of the already started operation cannot be started. This may be according to a setup of the system, and/or based on assumptions made for the schedule and/or system. Accordingly, the replacement plan may reflect system conditions.

The schedule may be based on order information. The method may comprise determining a fulfillable amount of ordered final products. Based on this, an order may be updated and/or a new order for missing material may be created, e.g., to determine a new schedule.

The method may comprise adapting one or more productive operations, e.g., as part of determining the replacement plan. For example, a number of iterations or repetitions of one or more steps in the productive operation may be adapted, e.g., to compensate for reduced available input material due to scrap being produced. In some cases, if enough replacement input material is available, a number of steps may be increased, e.g., to produce a replacement for scrap.

It may be considered that the method may comprise adapting one or more transport operations, for instance as part of determining the replacement plan. Adapting one or more transport operations may comprise changing a start and/or target of a transport, and/or adding or removing one or more transport. For example, a transport of additional input material may be added (which may not have been in the current schedule) to accommodate for scrap.

A controlling system for a shop floor is proposed, the controlling system being adapted for performing a method as described herein.

Indicating a replacement plan may comprise providing and/or transmitting the replacement plan to the shop floor and/or a controlling system and/or a MES. In some cases, a deviation from the schedule may be indicated, and/or which operations are still included may be indicated. In general, the replacement plan may be based on, and/or include, and/or consist of operations included in the current schedule. In some cases, some operations may be added that were not in current schedule, in particular one or more transport operations, which may provide input material to one or more machine arrangements. In some cases, no additional productive operations, and/or unproductive operations, may be included in the replacement plan.

A deviation, or an indication of a deviation, from the schedule may represent or indicate an error that occurred, e.g., a processing step having failed and/or scrap being produced, and/or failure of a component of the shop floor that is targeted for operation by the schedule, and/or new availability of a component (which may not have been considered when the schedule has been determined), and/or that a soft reset should be performed, and/or that a replacement plan should be indicated or provided.

Already started operations may comprise operation started, but not yet finished. The replacement plan may be determined while the schedule is being executed, and/or within the planning horizon of the schedule. The replacement plan may have a shorter planning horizon than the schedule being executed.

The schedule being executed may be considered a current schedule.

There is also described a computer program product comprising computer code causing processing circuitry and/or a computer system to perform a method as described herein when executed by the processing circuitry and/or the computer system.

A storage medium storing a computer program product as described herein is also proposed. The storage medium may be computer-readable and/or may be non-volatile and/or non-transitory.

Moreover, there is described a controlling system for a shop floor, the controlling system being adapted for performing a method as described herein and/or executing a computer program product as described herein.

The controlling system may comprise a Manufacturing Execution System, MES, adapted for controlling execution of a schedule and/or a replacement plan, and a scheduling system adapted for receiving information from the MES, determining the replacement plan and for providing the replacement plan to the MES.

There is also described a shop floor comprising a controlling system as described herein.

The method may especially be carried out, completely or in part, by electronic execution means and/or a control device or system like a computer system, which may comprise processing circuitry and/or memory. To these ends, the method may be formulated as a computer program product with program code means, which may be stored on non-volatile and/or non-transitory memory or storage medium, which may be computer-readable. The above-described system may comprise the computer system. Advantages or features of the method may apply to the system and computer program product and vice versa.

This system can be implemented by hardware, firmware and/or software or a combination of them.

### Brief Summary of the Enclosed Figures

The above-described properties, features and advantages of present invention as well as the way they are achieved will be made clearer and better understandable in the light of the following discussion making reference to exemplary embodiments shown in accompanying figures, in which
- Figure 1: shows an exemplary shop floor schematic using the invention; and
- Figure 2: shows an exemplary flow diagram of an inventive method.

### Detailed Exemplary Embodiments of the Invention

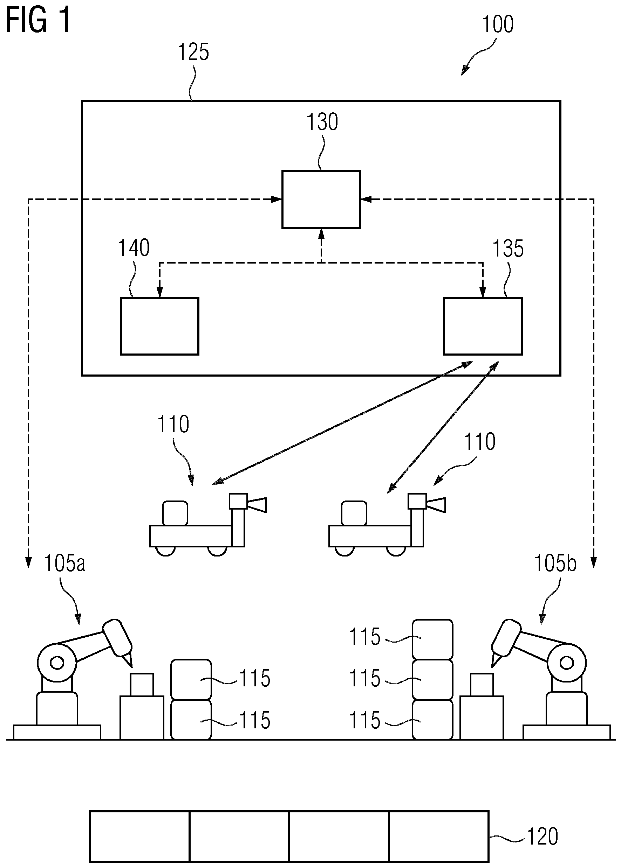

Figure 1 schematically shows an exemplary shop floor 100.

The shop floor 100 in general may be considered a manufacturing and/or processing environment or system, in particular a highly or fully automated environment or system. The shop floor 100 may be arranged in, and/or comprise, a building and/or one or more rooms or halls. It may be considered that a shop floor 100 may comprise different components, e.g., multiple machines or machine arrangements 105, and/or transport devices 110 for transporting material, in particular one or more AGVs (Automated Guided Vehicle). A shop floor 100 may comprise control devices and/or communication interfaces and/or monitoring devices, e.g., sensors like cameras and/or radar and/or lidar and/or scales, etc. A shop floor may be adapted to produce and/or manufacture one or more of different types of products, e.g., different electronics or mechatronics or toys or vehicles or mechanical products, or components of such products.

In general, a machine arrangement and/or machine 105 may be adapted for processing materials and/or manufacturing. A machine arrangement 105 may comprise one or more machines and/or processing devices, e.g., one or more tools and/or robots. A machine and/or machine arrangement 105 may be electronically and/digitally controlled and/or controllable, and/or may comprise one or more control devices and/or communication interfaces and/or monitoring devices. A machine or machine arrangement 105 may provide, e.g., via processing and/or manufacturing, an output material (e.g., in a lot size of a number of units) based on one or more input materials. A machine or machine arrangement 105 may receive information and/or instructions, e.g., for performing manufacturing and/or processing and/or one or more production steps or productive operation for such. It may be considered that a machine or machine arrangement 105 may be controlled or controllable by a controlling system like a MES, to perform one or more production steps. Production steps may be steps of processing and/or manufacturing and/or movement, e.g., performed on input material/s or a unit thereof, to produce an output material. A machine or machine arrangement 105 may be adapted, and/or comprise facilities, to move material, e.g., input material from and/or output material to a transfer station 115.

Material may be input material or output material. Input material in general may be processed or unprocessed (raw) material, e.g., metal, ore, mechanical components, electronic components, optical components, etc. Different input materials may be provided to a machine or machine arrangement 105. Material may comprise one or more instances (units) of one type of material. Output material may be processed material. Material may comprise one or more instances (units) of one type of material. A unit of material may be standardized to be of the same type, and/or size, and/or weight, and/or composition. For example, multiple units of one material may comprise multiple electronic components of the same type, or multiple bars of metal of the same size. Input material for a machine arrangement 105 may be provided externally, e.g., via a buffer 120, or in the form of output material from a preceding processing of the shop floor 100.

Processing and/or manufacturing may for example comprise one or more of applying one or more tools to input material/s, and/or performing one or more forming steps, and/or combining of different components (e.g., different input materials), and/or coating, and/or lasering, and/or painting, and/or welding, etc. Processing and/or manufacturing may comprise moving material, in particular within the machine arrangement 105 and/or to or from a transfer station 115 and/or a container. Output material for one machine or machine arrangement 105 may be input material for another machine or machine arrangement 105 with different processing and/or manufacturing setup, e.g., for further processing. Output material not intended for further processing by a shop floor machine arrangement 105 and/or the shop floor 100 may be considered a product or final product of the shop floor 100, which may be provided to a buffer, e.g., for removal and/or delivery to an external location. Input material that is intended as output material for further processing may be considered an intermediate product.

A shop floor 100 may comprise and/or be controlled or controllable by a controlling system 125, which may for example comprise a MES (Manufacturing Execution System) 130. A controlling system 125 and/or MES 130 may comprise one or more control devices and/or software component/s. The controlling system 125 and/or MES 130 may be adapted to receive monitoring information from shop floor sensors and/or machine arrangements 105 and/or from transport device like AGVs 110 and/or other sources, for example a transport control system 135 and/or external sensors, for example drone sensors and/or sensors arranged in a building housing the shop floor.

The controlling system 125 may be adapted to control, and/or provide instructions, to one or more machine arrangements and/or machines 105, e.g., via suitable communication interface/s (communication via communication interfaces is indicated with dashed lines in Figure 1). Control may be based on an operation schedule, which may be determined by the controlling system 125, for example a scheduling system 140 and/or the MES 130; the MES 130 may comprise the scheduling system 140, or it may be implemented as a separate control device or process, which may be in communication with the MES 130, and/or one or more other components of the controlling system 125 and/or the shop floor 100. The scheduling system 140 may receive information regarding and/or representing an order and/or operational state of the shop floor and/or individual subsystems (like the transport control system 135 and/or transport devices 110). Information may for example provided by the MES 130, and/or from one or more other components or subsystems, e.g., directly from the transport control system 135 and/or transport devices 110, and/or the machine arrangements 105, and/or a supervisor system, if such is implemented, for example to centrally monitor and/or control and/or evaluate the machine arrangements 105 and/or transport subsystem (e.g., AGVs 110 and/or transport control system 135). The MES 130, and/or the transport control system 135 and/or the scheduling system 140 may comprise one or more software components and/or modules and/or computer program products. A software or computer program product module may be provided for each action performed by a software. Figure 1 shows a centralized version of communication and control, but other architectures may be considered.

A shop floor 100 may comprise and/or have access to one or more buffer areas (also referred to as buffers) 120, where input material may be delivered, and intermediate and final products may be stored. In particular, initial input material may be delivered to a buffer 120, which may be externally supplied to fulfill an order, and/or may be automatically requested based on an order. It may be assumed that a shop floor 100 may be informed about materials needed to fulfill an order (providing the desired number of units of a final product indicated in the order), e.g., based on the order and/or on information otherwise available, e.g., in a bill of process and/or database.

Material may generally be provided to and/or from transfer stations 115 in containers. A container may be adapted to be able to contain a specific number of material units; different container types may be used for different materials, for example to allow ease of access for machines and/or robots. Containers of input material may be pre-prepared and/or provided at a buffer 120. The number of units of material for a container or container type may be pre-defined and/or fixed, e.g., for one or more types of material. For example, each container having the same input material may have, or be intended to have, the same number of units of this material. The number of units of output material may be dependent on the input material provided and/or a scheduling and/or an order. In some cases, a container with leftover input material may be transported below its intended number of units, e.g., if not all material has been needed to produce a desired number of output material units.

In general, outside of machines and/or machine arrangements 105, transport or movement of material may be in containers. A machine or machine arrangement 105 may be adapted to remove material from a container, and/or place material into a container.

Transport of containers containing material (or empty) may be provided using transport devices 110 like robots and/or AGVs. Transport devices 110 may be automated, e.g., remotely controlled by a transport control system 135 and/or independently controlled. Sensor input may be basis for transport control. It may be referred to transport to machines for brevity, which may be construed to mean transport to a transfer station of a machine. Machine and machine arrangement may be used interchangeably.

A transfer station 115 may be adapted to receive and/or store a container, and/or make a container accessible for a transport device 110 and/or a machine or machine arrangement 105. The transfer station 115 may comprise facilities to receive and/or provide and/or store and/or lift up and/or lift down and/or move a container. To a machine or machine arrangement 105, or buffer area 120, there may be associated one or more transfer stations 115. Different numbers of transfer stations 115, and/or different transfer stations 115, may be associated to different machine arrangements 105 and/or different buffers 120. In general, a transfer station 115 may be a (usually automated) handover point, where AGVs 110 can pick up or drop off containers. A machine 105 may have access to these stations and may use or deposit material in the containers there, e.g., if the station 115 is not part of a buffer 120.

Each transfer station 115 may be adapted to accommodate one container. A transfer station may be for input material, or output material, or both, for example at different points in time and/or for different types of material. This may depend on facilities for movement of material to and/or from a container associated to a machine or machine arrangement 105. In some cases, different transfer stations may be suitable for different types of containers. It may be considered that a transfer station is separately operable, and/or it may be controllable by the controlling system 125. In some cases, a transfer station 115 may comprise one or more sensors, to provide information or feedback to the controlling system 125, e.g., regarding containers and/or container content and/or container fill level, and/or status of AGVs 110 and/or a machine or machine arrangement 105, in particular the one it is associated to.

An order and/or order information may specify and/or indicate a certain number of units of a required final product and/or corresponding input material needed to provide the final product, and/or a number of containers providing at least the needed input material/s. Different orders may specify or indicate or pertain to different types of products and/or different unit numbers. To assemble one unit of such a product, a BOP (bill of process) may specify the production steps which must be performed. These steps can require additional input material, and it may be possible to specify whether steps can be performed sequentially or in parallel. The BOP can also be flexible (e.g., the sequence of some steps may not be fixed). The production steps may be modeled in such a granularity that one production step for a unit of an order can be processed unit by unit. Performing several steps on one unit before working on the next one may not be necessary.

Commissioned (e.g., initial) input material in appropriate containers for each order may be delivered externally to one of the buffers 120, e.g., from a loading station and/or a warehouse.

Each step in the bill of process may be executed on one machine for all units of an order. In some cases, there may be several machines or machine arrangements 105 which may execute a step, but a specific one may have to be picked to perform this step for each unit of an order.

A controlling system or central system (like a MES) 130 may trigger most or all operations necessary for the production to run, e.g., it may trigger and/or control one or more productive operations and/or unproductive operations for one or more machines. This may comprise the execution of a certain productive step or productive operation of a machine or machine arrangement 105 using input from prescribed transfer stations 115, and providing output to some transfer station 115, as well as a transport of some container from one transfer station 115 to another or to a buffer 120, or an "empty drive" which may be needed for an AGV 110 to get to a start location of a transport.

While there may be a separate system 135 that handles the details of AGV moves (like SIMOVE), the central system 130 may be responsible for having an overview and/or monitor what is currently processed, what is finished and what can and shall be processed next, for example based on information provided by transfer stations 115 and/or machines 105 and/or other sensors. In particular, a productive operation may be instructed to be carried out, wherein a productive operation may be based on a dynamic definition according to a schedule. In general, the schedule may indicate a definition of a productive operation.

A bill of process in this context may be dynamic or static. For example, a fixed database may be utilized, which may detail which steps need to be done for a product and which machines can perform a certain step (maybe with additional setups); alternatively, a dynamic system may be used (e.g., a knowledge-graph base system), which can make recommendations what can be done where.

Variations which do not fundamentally change the scenario described above may be considered. This might be partially automated versions or further restrictions. For example, if some transports are done by a human operator instead of an AGV 110, this can obviously be incorporated as long as there is an interface where the operator can generate the necessary signals that an AGV system 135 would generate (e.g., "transport completed"). Another example is use of transfer stations 115 which are not suitable for all container types.

Shop floor execution may be based on a plan or schedule which is generated in advance. Usually, the process starts with using some scheduling tool to generate a schedule as a basis. However, that plan may not have the necessary level of detail for automated shop floor processing, for example the required logistics may be not considered in adequate depth: Commercial scheduling tools (like Opcenter APS) tend to focus on long-term planning which considers "unproductive" operations like transports or product-dependent setups either as standardized prescribed time windows which block the product for a certain amount of time, or not at all.

Converting a rough plan which just schedules time windows for orders on machines and unproductive time windows for transfers to a detailed instruction how the actual shop floor execution can look like is usually done in a second step by a human operator. Therefore, such a schedule cannot really be used for automatically triggering production operations. It rather serves as a guideline for a human operator who is still responsible and in charge of triggering the upcoming production processes and reacting to changes which can occur in case of unforeseen events or simply due to wrong assumptions of the base schedule which didn't consider all necessary logistic details.

It may generally be assumed that there is a regular communication with the system(s) responsible for AGV operation (either directly or via MES) and that this system can answer requests and accept directions what should be done when.

A scheduling method and/or method of determining a replacement plan for a shop floor may be performed by a controlling system, in particular a scheduling system, and/or may be implemented as, and/or controlled by a computer program product. The scheduling system may in particular be a computer system and/or comprise processing circuitry and/or memory for performing the method. The shop floor may be a shop floor as described herein, in particular in the context of Figure 1.

A scheduling method may comprise receiving order information pertaining to one or more orders, and/or a bill of process. The bill of process may represent capabilities of machine arrangements of the shop floor. The order information may be provided by a central control system, in particular a MES. The order information may indicate, for at least one pending order, a number of units of a final product to be produced.

Order information may indicate initial input material, and/or a location (e.g., buffer and/or transfer station of a buffer) of the container/s providing initial input material for the order, and/or a time limit for fulfilling the order.

A schedule may be determined based on transport options and/or based on generating transport options; a transport option may be generated based on, and/or pertaining to the order information. This may include considering initial input material information, and/or time limit information, e.g., as indicated by the order information. The required initial input material may be determined based on the final product and/or from order information. It should be noted that some initial input material may not necessarily be for initial use or transport, but may be intended for further processing steps, e.g., to be used after one or more productive operations have been performed for an order.

The schedule may be provided for execution, e.g., to controlling system or a component thereof, e.g., an MES. Providing for execution may comprise transmitting the schedule to another system, e.g., an MES, and/or executing the schedule, for example controlling the shop floor, and/or one or more transport devices and/or one or more machine arrangements according to the schedule. Feedback from the shop floor may be received, e.g., feedback from the MES and/or central system, and/or one or more machine arrangements, and/or one or more transport devices, and/or a transport control system. Feedback may represent sensor information, and/or monitoring information, and/or status information (e.g., whether a production operation or transport has been completed), and/or error information, and/or one or more new and/or updated orders. An updated or new schedule may be determined; the updated or new schedule may be determined based on the feedback, which may for example exclude one or more transport options, and/or change timing.

When executing the schedule, an error may occur, for example a processing step may fail, e.g., producing scrap. While for example delays may be handled by updating a schedule, some errors may require further measures.

This invention describes a method to handle deviations or errors, in particular to deal with scrap parts and lot size adaption, for example in the context of iterative decision making and control processes without the need for human surveillance and without actively stopping ongoing production processes. Moreover, the method can also be used for automated adaptions in case of resource-dependent shop floor problems like temporary AGV or machine failures. The proposed approach may be referred to as "soft reset", during which active operations are continued; additional error specific data from other systems may not be needed in order to handle the error. Instead, a control process or execution or schedule may be adapted without disruptions.

If a processing step fails, this may mean that a unit of input material may be wasted (scrap) and/or a unit of output material is not produced as scheduled; this may have repercussions for further processing steps, which may not be able to produce the desired number of units of output material due to lack of sufficient input material. Since input is commissioned specifically for each order and intermediate products from previous production steps may be used, it may not be possible to just instruct production of one more unit to replace the scrap unit.

It may be assumed that completing the order with as many produced units as possible is a desired goal in an error situation. It is proposed using existing material as well as possible to avoid further reducing the fulfilled order size. If necessary, additional orders that supply and compensate for missing products due to scrap may be planned and commissioned separately.

Changes in lot size may also lead to containers which are not needed anymore, which may change the whole transport and operation breakdown structure.

This invention describes a soft reset feature for a control system or scheduling system, which may receive updates or feedback from execution of a schedule, e.g., from the MES (e.g., information indicating start and end time events of operations, number of successfully processed units of quantity and information on machine statuses, and/or information regarding errors, in particular regarding number of scrap units produced in a processing, in particular during execution of a productive operation). Decisions based on these updates or feedback may be provided back for execution, e.g., to the MES. Decisions may be for example in form of an updated schedule, or a set of instructions, e.g., to perform a soft-reset.

Error handling may need to be dynamic and may not be solvable by executing a plan which was specified in advance due to the uncertain nature of error occurrence. The question how to properly execute automated error handling is particularly relevant for automated production management, for example for a shop floor as described herein.

The proposed approach avoids performing what may be referred to as "hard reset" when an error occurs, where all processes are physically stopped, then it is determined at what state (e.g., regarding quantity of still available input materials) the shop floor currently is and if necessary, the state is changed such that the execution can resume. However, such a strategy is highly disruptive, requires a lot of time (e.g., gathering all necessary data to determine the current status) and may be unnecessary if there is no human operator who needs time for replanning anyway.

One goal of an automated system is efficient resource usage. When performing error handling, additional operations next to operations that can currently be executed may be considered. It may be assumed that there is a certain planning horizon, and that operations that could start within the planning horizon can already be planned and communicated to the MES. This also enables a predecessor-based MES to start processes earlier than planned if preceding operations finish sooner than expected.

It may be distinguished between the planned status (which includes all planned operations, according to a schedule) and the realized status, which tracks which operations like productive operations or transports are partially or fully realized, in particular, which operations have started or are already completed.

It may generally be assumed that the controlling system and/or scheduling system (also referred to as management system) may be option-based; decisions may be taken (to determine a schedule, e.g., by selecting a series or chain of available options) by repeatedly or iteratively evaluating options for actions and choosing one (or none) to update the planned status. Each operation instructed by a schedule, e.g., productive operation or non-productive operation or transport, may belong to some option for which it was added to the production execution plan (schedule). While embodiments based on transport-options has been referred to in detail, this concept does not require a specific option structure, thus other approaches may be considered.

For example, it may not be necessary to prescribe whether a machine setup operation has its own option or is planned as part of some other option (e.g., within a dynamically prescribed productive operation). In general, a schedule may represent operations that correspond to options selected from a set of options during option-based determination of the schedule, e.g., in a scheduling system. The schedule being executed may comprise instructing the operations, e.g., according to the schedule; an operation may be seen as an option to be realized. An operation or option may for example comprise one or more of a productive operation, non-productive operation (or corresponding processing steps), or a transport or movement of a transport device.

An operation or option may comprise one or more processing steps; in some cases, an operation or option may correspond to an instruction structure of the controlling system and/or machine or transport system, which may for example provide for individual instruction causing a plurality of actions or processing steps to be performed by the receiving machine or transport device. Operations which cannot be separated on a system level may be part of the same option. For example, if the AGV transport system handles the instruction to pick up a container, transport it somewhere, and drop it off as one unit which cannot be interrupted or partially cancelled by an external system, then the three corresponding operations (pick-up, transport, drop-off) must be planned as part of the same option. Moreover, an "empty drive" to a transport start location may usually be part of the same option as the transport itself.

If a controlling system like a MES encounters a situation where a soft reset should be performed, e.g., an error is detected, triggering further executions of operations may be avoided. For example, the controlling system may refrain from starting new operations (which may be indicated to be started according to a schedule being executed) since it cannot be sure if these operations will still be valid. Feedback, e.g., that an error occurred and/or indicating that a soft reset should be executed may be provided to the scheduling system; the feedback may indicate how the produced output differs from the expected output, if applicable.

A soft reset or associated schedule may be determined, and the result (e.g., in form of a schedule or set of instructions) may be communicated back to the MES, which may trigger or control actions or operations based on the new decisions.

A soft reset procedure may ensure continued operation while being able to react as flexible as possible to unexpected changes. Some aspects of the procedure may aim at or comprise:
a) Identifying a minimal executable plan based on the schedule being executed (during which an error occurred), which may comprise options (operations) to keep; other options or operations may be removed in order to obtain a feasible and efficient way of reacting to a changed planning situation. Some future planned operations may be removed because they are based on faulty information, for example, when a number of produced output material units changes.
b) If there are relevant changes, identifying and updating changed production requirements, in particular one or more of: the remaining fulfillable order amount; how many pieces per order and production step still need to be planned; the scrap per order and production step.

It may be considered to not interrupt currently processed or executed operations; human stock-taking may not be needed to continue producing. In contrast, a hard reset really stops processes, then it is necessary to take stock of the complete current situation, manually resolve ambiguous situations if required by the external systems (e.g., an AGV with a container which stops somewhere which is not an allowed destination). Then, the process is restarted from the resulting initial state without any fixed decisions. While that might be necessary, if there are serious problems on the shop floor, a less invasive procedure like a soft reset will usually be enough for the described errors.

A soft reset may also be helpful without a lot size reduction. If the MES encounters a scenario where it is advantageous to replan as much as possible, because the requirements have changed, triggering a soft reset would also be the right call. One example for that would be changes in machine availability, either because a new machine becomes available, or because there is a failure in some machine. In that case, part a) may be particularly relevant.

If each option corresponded to exactly one action or operation or processing step, a minimal executable plan would contain exactly the operations which were already started. However, an option may contain several closely related actions or operations or processing steps, which may be modeled as separate actions or operations to be able to adequately model predecessor relations. Moreover, an option can also reflect actions that should be evaluated as one "block" during the decision process and/or when executed. In general, an option may represent a combination of several actions and/or processing steps, which may different, or the same, e.g., when an action is to be repeated; a corresponding operation may also be referred to as combination operation.

Operations may in general have implicit predecessor relations. The direct predecessors of an operation 0 are the operations which belong to a minimal set of all operations which must be finished before O can start (this set is unique and easily computable). Since an option is only chosen if all its operations or actions or processing steps can feasibly be added to the current planned status, this may also induce a partial order (and thus predecessor relations) on the options. A predecessor (e.g., of successor like a step or option or transport or operation, in particular productive operation) may be a direct predecessor, and/or an indirect or implicit predecessor, and/or a predecessor of a predecessor (in one or more generations of preceding). In general, a predecessor may be an option and/or operation and/or movement and/or transport and/or action and/or processing step that has to be performed for a successor to be carried out. A predecessor may be considered logically and/or operationally necessary for a successor; performing the successor may be conditional on the predecessor occurring and/or being performed.

Based on an error and/or feedback indicating soft reset, an updated schedule may be determined, which may represent a minimal executable plan.

To compute or determine a minimal executable plan, a set S of all options which are needed to be included may be determined. It may be considered to add to, and/or include into, S all options, for which at least one operation or action is (at least partially) realized, specifically operations that have been started and/or that currently are executed. A set of reversible operation types may be defined. That is, if the only realized operations (currently executed) are reversible/stoppable, the option may be excluded from S and execution of the operation may be stopped instead. This may for example be an empty AGV drive, which was necessary to relocate the AGV if the AGV administration system allows stopping AGV drives. Starting from this set S, a transitive closure w.r.t. the predecessor relations may be determined. Any predecessor of an option in S also may be added to S until no further such predecessor exists.

An example for such a situation is the following:
Assume that pick-up, transport and drop-off of a container belong to the same option. AGV A transports container F1 from transfer station X to Y. the transport of F1 has already started. However, Y is currently occupied by a container F2, because AGV B has not yet picked up container F2 to make room for F1. Since B is closer, that operation and its containing option have not started yet. However, the drop-off of F1 cannot be completed before B has not completed the pick-up of F2 (in other words, the pickup of F2 by B is a predecessor of the drop-off of F1 by A). Thus, the corresponding option for the pickup of F2 and/or corresponding option needs to be included in S as well.

Moreover, if the algorithm makes assumptions about the order of options during the planning stage (when determining a schedule, for instance), these assumptions may be considered for the minimal feasible plan generation. For example, if an option of type A is planned before an option of type B can be planned, then including of an option of type B may lead to including the relevant options of type A. Note that this is not a strict predecessor relation on the execution side, but a planning sequence restriction, which (if it exists) must be considered during soft reset as well. On the other hand, it may be worthwhile to consider using planning rules in the control algorithm which keep S small, for example, not choosing an option too early if that causes a much larger set S. It may be considered that the fact that the smaller the set S, the more flexible we can react on the situation at hand after an error has occurred, e.g., by determining a new schedule to be executed after resolving the soft reset.

After S is computed, a plan or schedule to restart execution management may be generated, e.g., based on the currently executed schedule. The options may be replanned in the order they were first selected, and/or options not selected in S may be removed from the planned status (schedule). Of course, the MES may be notified about cancelled operations, e.g., in the form of an updated schedule and/or information indicating and/or representative of the schedule, and/or of cancelled operations, and/or of kept operations. The MES may start triggering executions again. Afterwards, the shop floor management has a well-defined status with which it can continue, e.g., with a determining a new schedule based on available orders.

In the context of b), the state of input material as well as the location of the error in the BOP may be considered. Let p be the production step in which scrap was produced.
i) If there is surplus input material for p, the number of units to be produced in that production step p may be increased (this can happen if we previously decreased the number to be produced due to scrap in other production steps or if some input was already produced when scrap happened elsewhere). If there is not enough to offset all scrap, action ii) may be considered for the amount of scrap that cannot be compensated.
ii) If the scrap cannot be compensated with present input (see i)), the fulfillable order amount may be updated, as well as the number of operations which should be performed for all production steps which are not BOP predecessors of p. In that case, it may be determined how large the reduction in produced output material is for each successor of p (p might produce several pieces or units which would have ended up in different units) or several pieces or units produced in p may end up in the same unit. Next, the determined number of executions for successors of p may be used to update the required number of executions for production steps which are neither successor nor predecessors of p in the BOP.

As an example for i), the following BOP may be considered:
Laser -> Assemble <- Depannel representing a process in which laser processing and depaneling, e.g., on different materials, are performed before the (different) materials are assembled.

If an error producing scrap at the depaneling occurs, then that leads to a reduction of laser and assemble operations. If there is a scrap at the laser afterwards, there may still be input material available to "try again" and increase the number of laser production steps as described in i).

Another example for ii): consider a case where one depaneling operation produces input material for the assembly of 4 units. Then a scrap of one at the laser actions may lead to a reduction of 1 for the number of assembled pieces or units, and the fulfillable order amount. But the number of depaneling executions is not reduced, since the remaining output is needed for other assembly operations. This is an example of different predecessor actions of one operation producing different numbers of units of output material to be used as input for the successor action.

Note that scrap may imply that non-empty input containers may exist somewhere in the system, so the automated control software or the controlling system may need to be able to manage cleanup operations.

If the priority in the production environment is on a high order completion rate, it would also be possible not to decrease the number of required executions for production steps which are not successors of p. That way, the chance to balance out future scrap may be increased. But additional input material may have to be used, which may not end up in products, so the preferred option here may depend on the cost of input material.

Once the number of required executions of production steps are computed, these may be used together with the minimal execution plan to continue planning and determine feasible production operations.

Preplanning solutions by nature cannot react to errors, thus the approaches described herein close a gap in a field which is going to become increasingly relevant with growing degrees of automation. Since there currently exists no automated solution, working without a human operator who must take decisions in a complex environment is a provided advantage. Possible efficiency gains provided by automated solutions can only be leveraged if good, automated solutions which fulfill the requirements of real time production management are available. A "hard reset" may be avoided, where production stops (at least in the affected area), then the complete current state of the shop floor is determined, and the management software restarts with the correct current state as a new basis. However, that is time-intensive and disruptive and would need an operator.

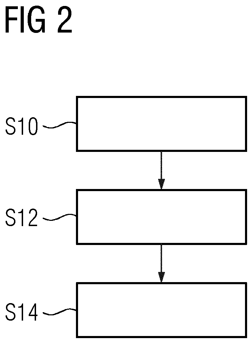

A schematic flow diagram of the inventive method is shown in Figure 2. It may be performed in the context of a shop floor as shown in Figure 1. The method may be performed in particular by a control system, in particular a scheduling system 140. It may be assumed that the control system performing the method is informed about the current schedule, e.g., due to it having it determined itself, and/or due information received from the controlling system 125, in particular a MES 130. The method may include determining the schedule, and/or functionality provided by a scheduling system 140 as described herein.

The method of determining a replacement plan may comprise an action S10 of receiving an indication that a deviation from a schedule being executed by the shop floor has occurred. This action may include receiving feedback, e.g., from a MES. The feedback may indicate the schedule, and/or operations already started (which may be not yet finished), and/or an error occurrence, and/or information specifying an error, and/or information regarding changes in the shop floor, and/or status information pertaining to one or more components of the shop floor, in particular one or more of the machine arrangements and/or transport devices and/or transfer stations. A computer program product and/or software may comprise a receiving module for performing action S10.

In an action S12, a replacement plan is determined. The replacement plan is based on the schedule. It may be considered that the replacement plan includes already started operations and excludes at least some operations scheduled according to the schedule. These may be operations not linked to already started operations as included, e.g., linked by being predecessor and/or successor and/or conditionally linked. A computer program product and/or software may comprise a determining module for performing action S12.

Action S14 comprises indicating the replacement plan for automated execution, e.g., to a component of the controlling system and/or a control device, in particular an MES. A computer program product and/or software may comprise an indicating module for performing action S10.

In the following, additional details regarding a possible approach to determine a schedule are provided. Options determined herein may be represented as operations in the schedule, and/or in the replacement plan. A transport option may represent a possible transport or movement of a transport device to fulfill an order, e.g., to provide input material and/or move output material, and/or suitably position the transport device, e.g., to fulfill the final product/s of the order. A transport option may be based on one or more initial transport options, e.g., of initial input material provided at a buffer, as provided externally for fulfilling the order. The schedule may be based on processing orders and/or transport options associated to orders, in sequence, or at least partly in parallel, e.g., depending on the bill of process, and/or the available machines, and/or transport capacity, and/or available material.

A transport option may be determined based on a productive operation definition, which may be dynamically determined as described herein, e.g., during determining the schedule and/or depending on transport options. A transport option may generally represent a transport possible to fulfill an order; this may for example limit potential initial transport options, as only one or a few potential initial processing steps and/or productive operations may be available. An unproductive operation may generally be an operation that may not directly be involved in processing material, but may be needed, e.g., for intermediate storage and/or setup or positioning of a machine arrangement or transport device, or maintenance, or monitoring, or communication.

Transport options may be successively derived based on one or more potential initial transport options.

A transport driven decision management is proposed, to determine the schedule. Possible transport options may be provided, and productive operations may be planned and/or executed as soon as all necessary criteria (e.g., enough input material and output space) are fulfilled. All possible transport options (e.g., in the context of pending orders) may be provided, and the most promising one may be selected, e.g., based on one or more optimization criteria and/or timing demands for one or more orders. It may be considered that the schedule is determined based on production operations determined based on transport options, and/or an order.

The schedule may represent and/or comprise, at least in part, instructions to actualize a number and/or series of transport options. A transport option in general may indicate a transport device, and/or a timing, and/or a start for a transport, and/or a target, and/or whether and/or which container to transport, and/or a path to take, and/or potential co-pending traffic or movement by other transport devices. A start or target may in particular correspond to a transfer station. The schedule may also represent and/or comprise instructions for productive and/or unproductive operation and/or associated processing steps for one or more machines or machine arrangements.

Generating transport options may be based on one or more of the following:
- full output containers may be transported to a buffer or to a next machine. All possible options may be considered if there is more than one machine available for further processing of output (e.g., a "next machine" for the order may not yet be specified;
- if transporting (input) material to a machine or transfer station has already started and/or finished (e.g., in the representation used for determining the schedule), only material for the corresponding order on this machine may be considered, until all input material required for this step is accounted for in the plan or schedule. Otherwise, material transports to the machine for all possible candidate orders may be considered;
- deadlock may be avoided. In this context, not all possible transports may be suggested. Otherwise, a situation may occur in which neither a productive operation nor transport of the required input material may be executed. As a simple example, enough space to be able to get at least one container for each input material and one space for output material needs to be available. In this context, further constraints may be considered. For example, some machines may have dedicated input or output transfer stations, while others may be flexible in that regard; it may be considered that some transfer stations may only accommodate certain types of containers.

The decision for the first transport of an order may determine the order sequencing on the machine. Thus, the evaluation which of these transports should be planned may be based on criteria for productive options in a "classical scheduling approach", but of course there may be additional transport-related decision criteria as well.

Depending on the planning horizon, to not plan anything and wait instead is always an option as well, e.g., for one or more machines and/or transport devices.

In general, the schedule may be dynamically updated, and/or performed repeatedly. The planning horizon of the scheduling (e.g., the time interval for which the scheduling is to be followed or executed by the shop floor) may be predetermined, and/or adapted dynamically, e.g., based on an order, and/or final product. For example, some products may intrinsically demand longer processing than others; correspondingly, a longer planning horizon may be used. The planning horizon can for example be 5 minutes or less, or 10 minutes or less, or 60 minutes or less. Alternatively, or additionally, the planning horizon may be shorter than the execution time for one of the orders, and/or such that at least one schedule update is performed when executing one of the orders (e.g., from providing initial input material to providing the desired final product). During execution of a schedule, an updated schedule may be determined for a succeeding time interval or planning horizon.

For scheduling, a lot size one may be considered, planning one operation for producing a unit on a machine. This corresponds to a time window where the machine is blocked. Unproductive operations like a setup may be added. For larger lot sizes, one time window for producing several units may not be enough: If a production operation is communicated as one item, it may need to be executable after a fixed set of other (predecessor) operations is finished. Since the number of transfer stations and thus the number of slots for input and output containers is limited, it may not be possible to create or schedule a situation beforehand, where all units of one order can be produced without executing other operations in between (e.g., replenishing input, or removing an output container to free up space for a new one).

On the other hand, unnecessary communication between systems (in this case, between the executing machine and the MES) may create undesirable communication overhead. Instead of treating each unit individually, a productive operation may be defined as the maximum number of unit execution steps for an order which use a fixed set of transfer stations for input and output material. After a productive operation, there may be a full output container, and/or an empty input container; the productive operation may be defined correspondingly. Accordingly, dynamically generating the productive operations for an order on a machine is proposed, based on which input will be available where and which transfer stations are free for output usage.

This approach may minimize the necessary amount of communication and/or may be compatible with every sequence in which input containers are driven to the machine (provided deadlocks are avoided in transport planning). In particular, it may not be necessary to decide, before planning transports, whether to first use material, that can be transported directly from a previous machine, or material which is already in a buffer for intermediate storage. In general, the schedule may be determined based on defining one or more productive operations, and/or based on thus-defined productive operations. It may be considered that a productive operation may be defined based on transport options and/or be dynamically defined.

These concepts are compatible with a shop floor management system which knows the current state and plans all necessary operations for shop floor operation for a configurable time horizon, which may react to, and incorporate extensions and reductions in execution times of an operation. Since the planning horizon is not fixed, they can also be used to plan ahead for longer time horizons (e.g., to estimate finishing times of an entire order).

One iteration of the process or method may comprise receiving feedback from the MES, generating all currently plannable options (transport and productive options as described above) based on the feedback. Next, the system may decide which option and/or options and/or set of options to take based on how the plan which extends the current choices by including the new option/s or set would look like.

In this action, additionally necessary unproductive operations like setups or storage at the buffers may be included, and the schedule may be based on this consideration. The best choice (which can also be to do nothing) may then fixed or decided on, to determine the schedule. A certain schedule may be determined, but the schedule or determined times or timing may still change based on future MES feedback.

Incorporating changed times (of operation and/or transport, for example) may help making better decisions or improving scheduling. For example, if a machine or AGV is still busy due to some delay during execution of the schedule, an update may consider using alternative free resources.

The MES can either work on a time-based or on a predecessor-based structure. That means, after all systems synchronize their time in the beginning, the concept and approaches are compatible with a triggering system which either starts a new operation after all predecessors (which may be communicated to the MES) are finished, or at a specified time. Especially for the second variant, the management software or scheduling system may adapt to changes in estimated times. Already taken timing decisions of the schedule may be reviewed and/or changed and/or compensated for, based on feedback from the MES which operations finished when. The schedule may be based on information provided about a status of the shop floor, and/or one or more machines, and/or one or more transfer stations, and/or one or more transport devices. For predecessor-based MES, adaption capabilities facilitate making good decisions in a changing environment, represented in an efficient schedule.

Using dynamically defined productive operations may avoid large communication overhead (since otherwise, the MES would have to trigger each operation separately, and also may have to wait for the feedback that the operation was finished). Moreover, internal optimizing processes (like parallelizing the physical manipulation of the workpiece and retrieving the next raw material) is facilitated.

The approaches described allow efficiently dealing with non-unit lot sizes and formulating a method for automated shop floor operation in the form of an executable schedule, which in particular may be executable without intermediate human interaction. Work in progress may be reduced, e.g., reducing the amount of material standing somewhere on the shop floor and waiting to be processed, and/or reducing production cycle times of customer orders.

In contrast to a human operator, the described approaches are automated and adaptive, may optimize resource usage. In addition to operating the execution level on the shop floor, the method may also be used to create mid- and long-term production plans or schedules with integrated logistics. To this end, a shop floor simulation may be used, which just does as estimated in the planning steps. This simulation may take the role of the shop floor on the MES side and is easy to implement. Such a schedule can be useful for capacity planning or delivery date estimation and is more precise than classical scheduling tools which only consider logistics in a second step or not at all.

A control device or system may comprise circuitry, which may comprise integrated circuitry. Processing circuitry may comprise one or more processors and/or controllers (e.g., microcontrollers), and/or ASICs (Application Specific Integrated Circuitry) and/or FPGAs (Field Programmable Gate Array), or similar. It may be considered that processing circuitry comprises, and/or is (operatively) connected or connectable to one or more memories or memory arrangements. A memory arrangement may comprise one or more memories. A memory or storage medium may be adapted to store digital information. Examples for memories or storage media comprise volatile and non-volatile memory or media, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM).

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

## Claims

1. Method of determining a replacement plan for a shop floor (100), the shop floor (100) comprising a plurality of automated machine arrangements (105), each machine arrangement (105) being associated to one or more transfer stations (115), a plurality of transport devices (110) being controllable to move containers for material between transfer stations (115) of the machine arrangements (105) and/or of one or more buffer areas (120), the method comprising:
- receiving (S10) an indication that a deviation from a schedule being executed by the shop floor has occurred;
- determining (S12) a replacement plan, wherein the replacement plan is based on the schedule, the replacement plan including already started operations, and excluding at least some operations scheduled according to the schedule;
- indicating (S14) the replacement plan for automated execution.

2. Method according to claim 1, wherein the method comprises executing the replacement plan, and determining a new schedule.

3. Method according to one of the preceding claims, wherein according to the replacement plan, already started operations are to be continued and/or not stopped.

4. Method according to one of the preceding claims, wherein predecessor operations of included already started and/or not yet started operations are also included in the replacement plan.

5. Method according to one of the preceding claims, wherein an operation is a combined operation, which comprises multiple actions or processing steps to be performed by a machine arrangement and/or transport device, and/or is a productive operation.

6. Method according to one of the preceding claims, wherein reversible already started operations are excluded from the replacement plan.

7. Method according to one of the preceding claims, wherein operations included already started operations are conditioned on are included in the replacement plan.

8. Method according to one of the preceding claims, wherein the schedule is based on order information, and wherein the method comprises determining a fulfillable amount of ordered final products.

9. Method according to one of the preceding claims, wherein the method comprises adapting one or more productive operations.

10. Method according to one of the preceding claims, wherein the method comprises adapting one or more transport operations.

11. Computer program product comprising computer code causing processing circuitry and/or a computer system to perform the method according to one of claims 1 to 10 when executed by the processing circuitry and/or the computer system.

12. Storage medium storing a computer program product according to claim 11.

13. Controlling system (125) for a shop floor (100), the controlling system (125) adapted for performing a method according to one of claims 1 to 10.

14. Controlling system (125) according to claim 13, wherein the controlling system (125) comprises a Manufacturing Execution System (130), MES, adapted for controlling execution of a schedule and/or a replacement plan, and a scheduling system (140) adapted for receiving information from the MES (130), determining the replacement plan and for providing the replacement plan to the MES (130).

15. Shop floor (100) comprising a controlling system (125) according to one of claims 13 and 14.
